Europäisches Patentamt

European Patent Office

Office européen des brevets

(11) Publication number: **0 217 170**
**B1**

(12) **EUROPEAN PATENT SPECIFICATION**

(45) Date of publication of patent specification: **07.02.90**

(51) Int. Cl.⁵: **F 16 H 57/02**

(21) Application number: **86112259.6**

(22) Date of filing: **04.09.86**

(54) Worm reduction gear with connections.

(30) Priority: **10.09.85 YU 1418/85**

(43) Date of publication of application:
**08.04.87 Bulletin 87/15**

(45) Publication of the grant of the patent:
**07.02.90 Bulletin 90/06**

(84) Designated Contracting States:
**AT BE CH DE FR GB IT LI NL SE**

(56) References cited:
**DE-A-3 337 059**
**FR-A-2 345 627**
**US-A-2 108 262**
**US-A-4 261 218**

(73) Proprietor: **Zupancic, Viktor**
**Cesta v gorice 10/d**
**YU-61111 Ljubljana (YU)**

(72) Inventor: **Zupancic, Viktor**
**Cesta v gorice 10/d**
**YU-61111 Ljubljana (YU)**

(74) Representative: **Torggler, Paul, Dr. et al**
**Wilhelm-Greil-Strasse 16**
**A-6020 Innsbruck (AT)**

Courier Press, Leamington Spa, England.

## Description

The invention relates to a worm reduction gear having a casing and an embedded and driven worm which adheres snugly to a worm wheel embedded on a worm wheel shaft; said worm wheel is inserted in the worm between bearings; the bearings are seated in centering bushes extending to one seal each, inserted in the casing.

The engineering problem to be solved by the invention is a multiple one: to simplify the product, to make it easy to manufacture, to make it widely applicable, and to make it cheaper, especially in terms of materials and energy. It is the object of the invention to achieve a pure structure capable of enduring higher loads on a lesser weight of the reducing gear, on less material used and on less space. The worm reducing gear is to be designed so that manual work will no more be necessary, that it will be manufactured by machine, preferably automatic, in mass production. A reducing gear according to the invention should have only the parts which are absolutely necessary, these being as simple as possible, and the structure should be stronger, i.e. strong enough to make it possible to build in, in the same casing, weaker or stronger driving components like a worm, worm-wheel, a shaft, bearings, etc., in order to make the product less expensive.

In addition to its driving ability, the reducing gear should be capable of bearing driven structures and of steering, by turning in the center of the driving shaft, the wheels which should be fastened on the shaft either both on the same side of the shaft or one on each side of the shaft. These wheels should turn about the vertical and the horizontal axes. The control of the reduction gear on a mobile machine may be designed in three ways: with another reduction gear, with a cogwheel and a toothed rack, or manually with a lever.

The state of the art has long been almost unchanged. Worm reduction gears are made of a standard box-like casing to which a cover is screwed on either side in which a bearing and a seal are placed and which extend in a base in which two bores are cut through the fastening the worm reduction gear. On its ends the worm reduction gear has covers screwed to the casing. Such a worm reduction gear is disclosed in US—A—4 261 218.

As they are, worm reduction gears are not suitable for the manufacture on automatic machines and by robots—as a result, they are too expensive and not available enough. They are not suitable for simultaneous bearing and driving of the same loads. Sealing and centering are imperfect and unreliable. The existing reduction gear types are complicated to assemble; the worm and the worm wheel are not always fixed within the tolerances required because the assembly depends more or less on the human factor—the mechanic who has to hold the sides of the worm reducing gear casing in his hands while trying to adjust them with gaskets and bolts during his assembly work.

As they are, worm reduction gears do not allow optignal installation, suspension, carrying, and driving of the same loads, they do not allow optional location and adaptation to suit any user. For the same connect load and actual load, the existing worm reduction gears are much larger and heavier. In addition, in case of known, well established worm reduction gears a great variety of gears are to be made, varying in volume, weight and power.

It is the object of the invention to simplify a worm reduction gear, to make it easy to manufacture, to make it widely applicable, and to make it less costly, especially in terms of materials and energy.

It is another object of the invention to achieve a structure capable of enduring higher loads with a reducing gear of less weight, using less material and occupying less space.

The worm reducing gear of the invention is intended to eliminate the need for manual work, and can be manufactured by machine, preferably automatically, in mass production.

It is another object of the invention to provide a reducing gear which has only the parts which are absolutely necessary, these being as simple as possible, and a structure which is stronger, i.e. strong enough to make it possible to build in, in the same casing, weaker or stronger driving components via a worm, worm-wheel, a shaft, bearings, etc., in order to make the product less expensive.

Advantageously the reducing gear should be capable of bearing driven structures and of steering, by turning in the center of the driving shaft, the wheels which should be fastened on the shaft either both on the same side of the shaft or one on each side of the shaft. These wheels should turn about the vertical and the horizontal axes. The control of the reduction gear on a mobile machine may be supplied by another reduction gear, by a cogwheel and a toothed rack, or manually by a lever.

A worm reduction gear according to the invention is characterized in that the casing is formed by a first cylindrical tube and a second cylindrical tube having an axis perpendicular to the axis of the first cylindrical tube, that the worm wheel shaft extends along the axis of the first tube, the seals being rings situated on the inner cylindrical mantle of the cylindrical tube at a distance from the lateral side of the latter and that retaining rings for holding said centering bushes are situated in grooves in said tube.

The worm reduction gear according to this invention is designed that it does not need any bolts or screws. Thus, the product can be manufactured completely by machine, preferably on a lathe. The reduction gear consists of less components, the remaining ones being incomparably simpler, cheaper, and more reliable. Now, a reduction gear can be made by machine, completely automatically, in mass production.

In addition, sealing is cheaper, simpler, and more reliable, it does not depend on the quality of the surfaces and on the accuracy of placing the gaskets as much as it did before. On an electromotor, the reduction gear can be applied provided that the gear is borne directly by the electromotor standing on its standard legs. According to the invention, flat lateral gaskets are to be replaced by round flange gaskets.

Further, the reduction gear is equipped for bearing and driving a machine and for steering, by turning in the centre of the driving shaft, the wheels which should be fastened on the shaft either both on the same side of the shaft or one on each side of it. These wheels turn about the vertical and horizontal axes. The control of the reduction gear on a mobile machine may be designed in three ways: with another reduction gear, with a cogwheel and a toothed rack, or manually with a lever.

A worm reduction gear according to the invention is suitable for a variety of applications. For this purpose, the reduction gear has several connections and supports for bearing attached driving structures and loads at the same time; in case of a fork-lift, this is a connection for a workshop lift and for a construction trade bracket lift, further a connection for vineyard and garden ploughing, for transporting manure to a vineyard; a reduction gear designed for conveyor worms and transporters in the processing industry and construction industry. All the needs have been met by worm reduction gears in three casing sizes only.

In details, the invention is shown on the following drawings:

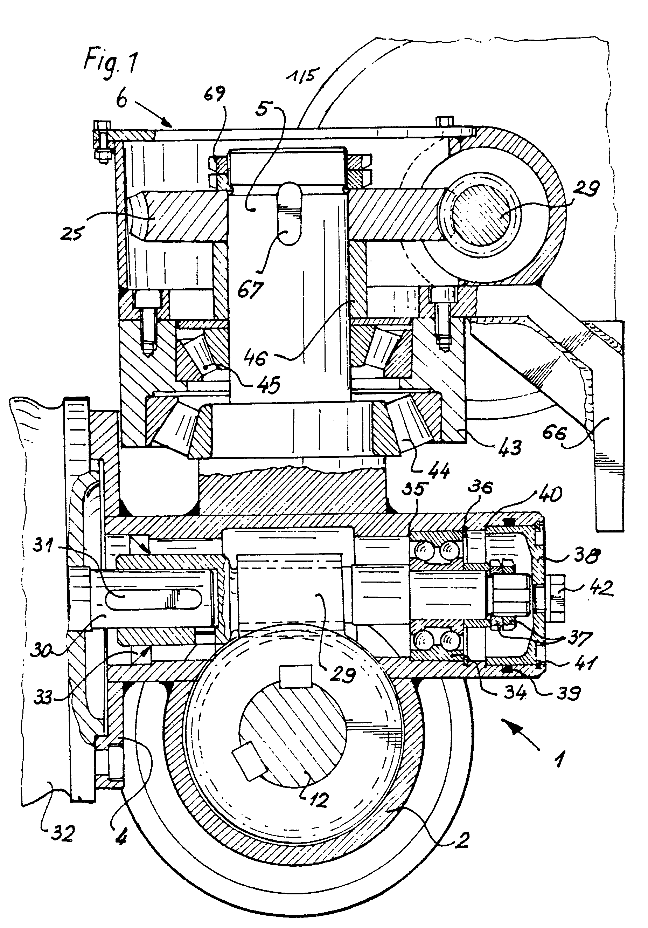

Fig. 1 is an elevational view of a worm reduction gear according to the invention, with a connection for a steering wheel;

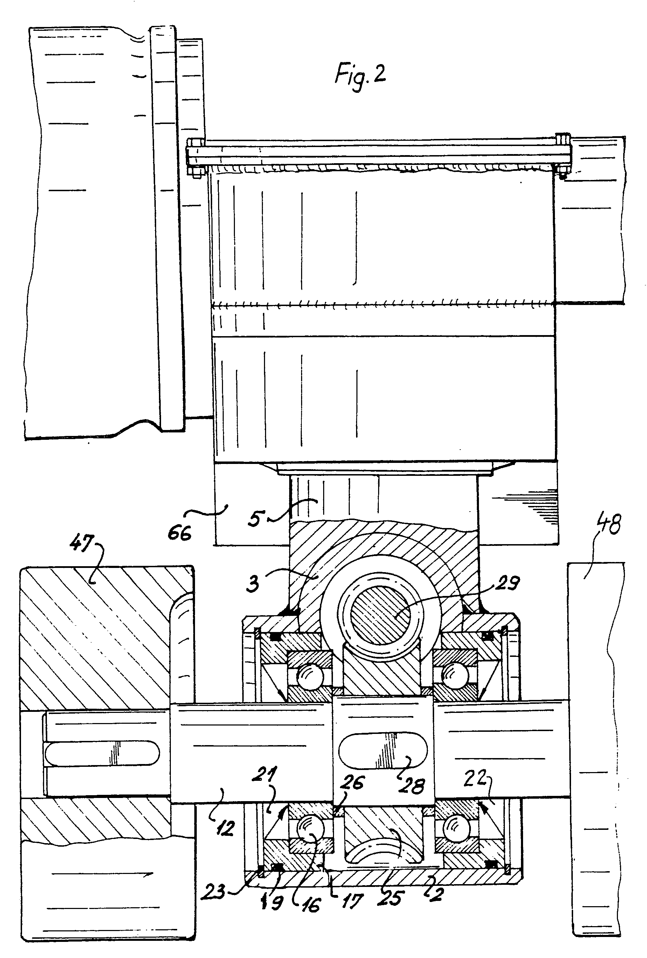

Fig. 2 is a side-elevational view of a worm reduction gear according to the invention;

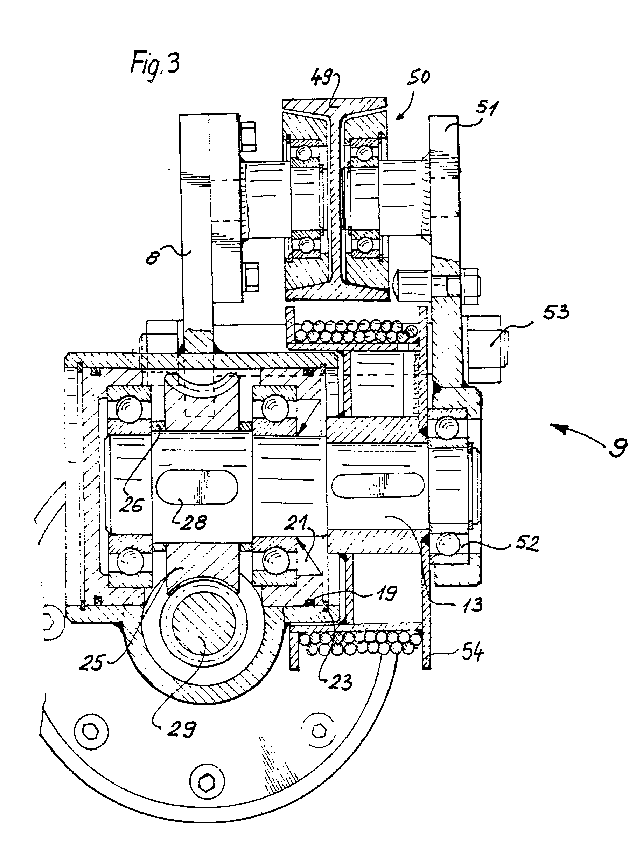

Fig. 3 is an elevational view of a worm reduction gear according to the invention, with a mobile hoist fixed to it;

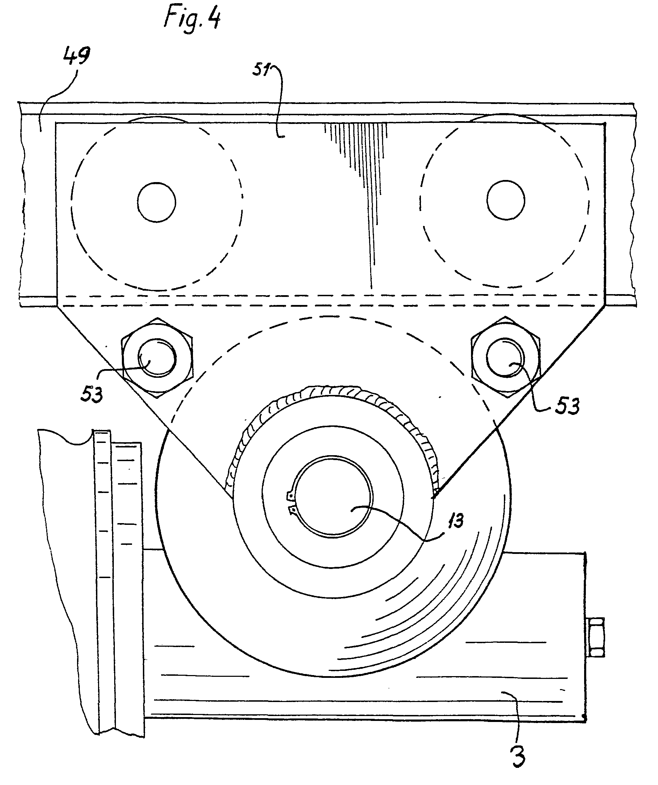

Fig. 4 is a side-elevational view of a worm reduction gear according to the invention, with a mobile hoist fixed to it;

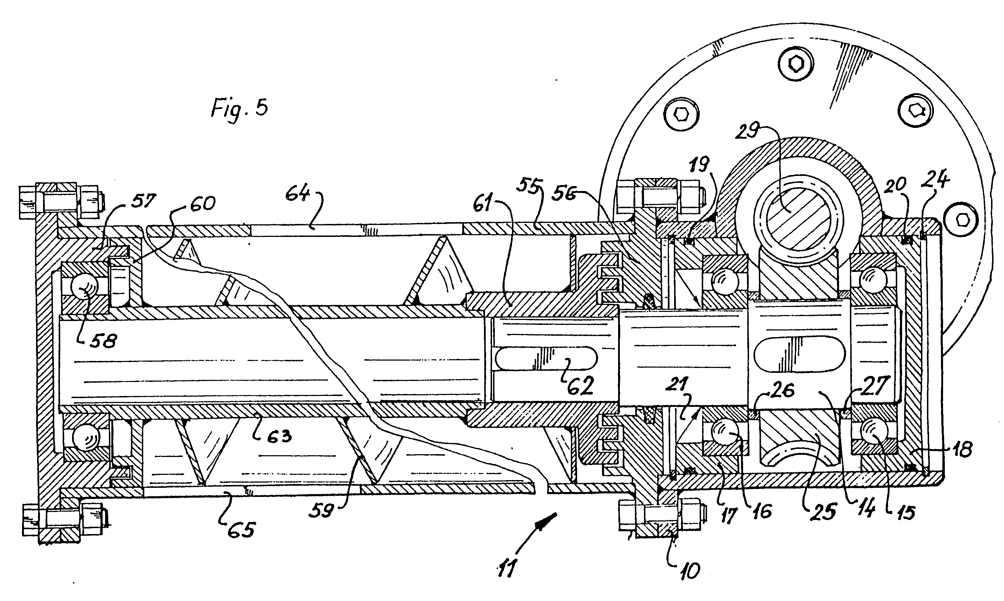

Fig. 5 is a cross-sectional view of a worm reduction gear according to the invention, applied in a worm-conveyer.

A worm reduction gear according to this invention has a casing 1 and consists of a tube 2 and a tube 3, a flange 4 welded together from three pieces or cast from one piece, including supporting connections 5 for a steering wheel 6, a connection 8 for a hoist 9, and a connection 10 for, e.g., a worm conveyer 11.

Inserted in the casing 1 is a shaft 12, 13, 14 with bearings 15 and 16 on which there are centering bushes 17 or a centering cover 18 with round flange gaskets 19 and 20 and seals 21 and 22 which are limited and fixed by two Seeger rings 23 and 24. Between the bearings 15 and 16 there is a worm wheel 25 with spacers 26 and 27 and a peg 28, while the worm wheel 25 fits snugly against the worm 29 which is inserted in the tube 3 and fixed on the shaft 30 by a peg 31 of an electromotor 32 and sealed by a seal 33.

The other end of the worm 29 is fixed in an axial bearing 34 located between the seating 35 and the Seeger ring 36 and fastened by two bearing nuts 37, all covered by a cover 38 and sealed by a round gasket 39 limited by a seating 40 and a Seeger ring 41. The cover incorporates a bolt 42 with a point where the reduction gear is filled with oil. The bolt 42 also serves as cover remover.

If and when the supporting connection 5 for the steering wheel 6 is placed on the tube 3 the casing 43 incorporates the bearings 44 and 45 which are fixed through a spacer 46 on which another casing 1 is located designed for left and right steering of a vehicle or a machine standing on wheels 47 and 48.

Between the second casing 1 and the steering wheel 6 there is an assembly console 66 supporting (on bearings 44 and 45 and the casing 43) both said casing 1 and the steering wheel 6. Between the bearing 45 and the worm wheel 25—which is on the supporting connection 5 with a wedge 67—there is a spacer 46 fixed with two bearing nuts 69.

When a worm reduction gear is suspended on a guiding and supporting section 49 it has two supports with plugs and bearings 50 and, in addition if necessary, another support 51 with a bearing 52 which are fastened by two spacing screws 53 between which on the shaft 13 a winding drum 54 with a string is located. Further, the reduction gear can also be designed for other applications like the already shown worm conveyer with worm reduction gear 11—a casing 55, fastened to a flange 10 by a bolt, with a labyrinth flange 56 and a labyrinth cover 57 in which there is a bearing 58 supporting a worm 59 with counter-labyrinth 60, while the other leg of the labyrinth hub 61 is fixed on a shaft 14 by a peg 62, between which there is, preferably, a tubular shaft 63. The worm conveyer has an inlet opening 64 and an outlet opening 65.

A worm reduction gear according to the invention with connections works as follows:

An electromotor 32 drives preferably through a peg 31 and carries a worm 29 which is guided and axially held in position by a bearing 34 and which is tightly enclosed by a worm wheel 25 which drives a shaft 12 through pegs 28, and when two wheels 47 and a supporting base 5 are fastened to the shaft and when another worm reduction gear for left and right turning is applied here, then the worm reduction gear carries, steers, and drives the machine simultaneously. A worm reduction gear used as a hoist, however, carries and drives the load. And further, a worm reduction gear can be applied only as the driving part of a machine.

## Claims

1. A worm reduction gear having a casing (1) and an embedded and driven worm (29) which adheres snugly to a worm wheel (25) fixed on a worm wheel shaft (12, 13, 14); said worm wheel (25) is inserted in the worm (29) between bearings (16); the bearings (16) are seated in centering bushes (17) extending to one seal (19) each, inserted in the casing, characterized in that the casing (1) is formed by a first cylindrical tube (2) and a second cylindrical tube (3) having an axis perpendicular to the axis of the first cylindrical tube (2), that the worm wheel shaft (12) extends along the axis of the first tube (2), the seals (19) being rings situated on the inner cylindrical mantle of the first cylindrical tube (2) at a distance from the lateral side of the latter and that retaining rings (23) for holding said centering bushes (17) are situated in grooves in said first tube (2).

2. A worm reduction gear according to Claim 1, characterized in that the tubes (2, 3) carry flanges (4, 10).

3. A worm reduction gear according to Claim 1, characterized in that two carrying wheels (47, 48) are mounted on the worm wheel shaft (12).

4. A worm reduction gear according to Claim 1 characterized by a supporting connection (5) for a steering wheel (6).

5. A worm reduction gear according to Claim 4, characterized in that on the supporting connection (5) there are two bearings (44) and (45) in a casing (43) to which an angular support (66) is mounted by bolts, and on the supporting connection (5) above the angular support (66) a worm wheel (25) is keyed, the worm wheel (25) being part of another reduction gear intended for turning the worm reduction gear.

6. A worm reduction gear according to Claim 1, characterized in that embedded on a supporting section (49) are two supports (8) and (51), the support (8) being connected with the casing (1) somewhere in the middle of the axle of the worm wheel (25) and the support (51) being connected along the winding drum (54) which is mounted near the second tube (3), the support (51) being embedded on the shaft (13) with a bearing (52).

7. A worm reduction gear according to Claim 1, characterized in that on the first tube (2) there is a flange (10) of a worm reduction gear (11) connected to the casing (55) of the worm conveyer with labyrinth flange (56) and (57) with counter-laybrinths (60) and (61) on a tubular shaft (63) which is set on the shaft (14) of the reduction gear (1).

**Patentansprüche**

1. Ein Schneckengetriebe mit einem Gehäuse (1), in das eine angetriebene Schnekke (29) eingesetzt ist, die satt in ein Schneckenritzel (25) eingreift, das auf einer Schneckenritzelwelle (12, 13, 16) befestigt ist; das Schneckenritzel (25) greift zwischen Lagern (16) in die Schnecke (29) ein; die Lager (16) sind auf Positionierungsbuchsen (17) gelagert, die in das Gehäuse (1) eingesetzt sind und mit je einer Dichtung (19) abschließen, dadurch gekennzeichnet, daß das Gehäuse (1) von einem ersten zylindrischen Rohr (2) und einem zweiten zylindrischen Rohr (3), dessen Achse in einem rechten Winkel zur Achse des ersten zylindrischen Rohres (2) verläuft, gebildet wird, daß sich die Schneckenritzelwelle (12) entlang der Achse des ersten Rohres (2) erstreckt, daß die Dichtungen (19) Ringe sind, die sich am inneren zylindrischen Mantel des ersten Rohres (2) mit Abstand von dessen Stirnseite befinden und daß Sicherungsringe (23), die die Positionierungsbuchsen (17) halten in Nuten des ersten Rohres (2) angeordnet sind.

2. Ein Schneckengetriebe nach Anspruch 1, dadurch gekennzeichnet, daß die Rohre (2, 3) mit Flanschen (4, 10) versehen sind.

3. Ein Schneckengetriebe nach Anspruch 1, dadurch gekennzeichnet, daß die beiden Tragräder (47, 48) auf der Schneckenritzelwelle (12) gelagert sind.

4. Ein Schneckengetriebe nach Anspruch 1, gekennzeichnet durch ein Träger- und Verbindungsstück (5) für ein Steurrad (6).

5. Ein Schneckengetriebe nach Anspruch 4, dadurch gekennzeichnet, daß sich auf dem Träger- und Verbindungsstück (5) zwei Lager (44) und (45) befinden, und zwar in einem Gehäuse (43), an das eine winkelförmige Stütze (66) angeschraubt ist und daß oberhalb der winkelförmigen Stütze (66) ein Schneckenritzel (25) auf das Träger- und Verbindungsstück (5) aufgekeilt ist, welches Teil eines anderen Getriebes zum Drehen des Schneckengetriebes ist.

6. Ein Schneckengetriebe nach Anspruch 1, dadurch gekennzeichnet, daß in einem Trägerabschnitt (49) zwei Träger (8) und (51) eingesetzt sind, wobei der Träger (8) mit dem Gehäuse (1) in etwa in der Mitte der Achse des Schneckenritzels (25) verbunden ist und der Träger (51) mit der Windentrommel (54), die bei dem zweiten Rohr (3) gelagert ist verbunden ist, wobei der Träger (51) mit einem Lager (52) auf der Welle (13) lagert.

7. Ein Schneckengehäuse nach Anspruch 1, dadurch gekennzeichnet, daß sich auf dem ersten Rohr (2) ein Flansh (10) eines Schneckengetriebes (11) befindet, der mit dem Gehäuse (55) des Schneckenförders verbunden ist, der Leitflanschen (56) und (57) mit Gegenführungen (60) und (61) auf einer rohrförmigen Welle (63), welche auf die Welle (14) des Schneckengetriebes (1) aufgesetzt ist, aufweist.

**Revendications**

1. Un réducteur à vis sans fin comportant un boîtier (1) et une vis sans fin (29) logée et entraînée qui adhère en affleurement avec une roue à vis (25) fixée sur un arbre (12, 13, 14) de roue à vis, ladite roue à vis (25) étant insérée dans la vis sans fin (29) entre des paliers (16); les paliers (16) étant logés dans des douilles de centrage (17) s'étendant chacune vers un joint (19), inséré dans le boîtier, caractérisé en ce que le boîtier (1) comporte un premier tube cylindrique (2) et un deuxième tube cylindrique (3) possédant un axe perpendiculaire à l'axe du premier tube cylindrique (2), en ce que l'arbre (12) de roue à vis s'étend le long de l'axe du premier tube (2), les joints (19) étant des anneaux situés sur l'enveloppe cylindrique intérieure du premier tube cylindrique (2) à une distance depuis le côté latéral de ce dernier, et en ce que les anneaux de maintien (23) destinés à maintenir lesdites douilles de centrage (17) sont situés dans des rainures dans ledit premier tube (2).

2. Un réducteur à vis sans fin selon la revendication 1, caractérisé en ce que les tubes (2, 3) portent des brides (4, 10).

3. Un réducteur à vis sans fin selon la revendication 1, caractérisé en ce que deux roues de support (47, 48) sont montées sur l'arbre (12) de roue à vis.

4. Un réducteur à vis sans fin selon la revendication 1 caractérisé par une liaison (5) de support pour un volant (6) de conduite.

5. Un réducteur à vis sans fin selon la revendication 4, caractérisé en ce que l'on dispose, sur la liaison (5) de support, deux paliers (44) et (45) dans un boîtier (43) sur lequel un support angulaire (66) est monté par boulons, et en ce qu'une roue à vis (25), qui fait partie d'un autre réducteur destiné à tourner la réducteur à vis sans fin, est clavetée sur la liaison (5) de support au dessus du support angulaire (66).

6. Un réducteur à vis sans fin selon la revendication 1, caractérisé en ce que deux supports (8) et (51) sont logés sur une section (49) de support, le support (8) étant relié au boîtier (1) à un emplacement situé au milieu de l'axe de la roue à vis (25) et le support (51) étant relié le long du tambour (54) d'enroulement qui est monté près du deuxième tube (3), le support (51) étant logé sur l'arbre (13) à l'aide d'un palier (52).

7. Un réducteur à vis sans fin selon la revendication 1, caractérisé en ce que le premier tube (2) porte une bride (10) de réducteur (11) à vis sans fin reliée au boîtier (55) du support de vis sans fin par une bride à labyrinthe (56) et (57) avec des contre-labyrinthes (60) et (61) sur un arbre tubulaire (63) qui est monté sur l'arbre (14) du réducteur (1).

EP 0 217 170 B1

Fig. 1

*Fig.2*

*Fig.3*

Fig. 4

Fig. 5